# FASCICULE DE BREVET EUROPEEN

(11) **EP 3 694 068 B1**
(45) Date de publication et mention de la délivrance du brevet: **18.10.2023**
(21) Numéro de dépôt: 19156383.2
(22) Date de dépôt: 11.02.2019
(51) Int. Cl.: H02H 9/02, H01H 33/59

(54) **SYSTÈME DE COMMUTATION STATIQUE ET DE LIMITATION D'UN COURANT CONTINU**
STATISCHES SCHALTSYSTEM UND SYSTEM ZUR BEGRENZUNG EINES GLEICHSTROMS
SYSTEM FOR STATIC SWITCHING AND LIMITING OF A DIRECT CURRENT

(43) Date de publication de la demande: 12.08.2020
(73) Titulaire: GE Energy Power Conversion Technology Ltd, RUGBY, Warwickshire CV21 1BD (GB)
(72) Inventeur: LAPASSAT, Nicolas, 91140 Villebon sur Yvette (FR)
(74) Mandataire: Casalonga

(56) Documents cités:
- EP-A2- 3 300 252
- US-A1- 2015 236 498
- US-A1- 2017 063 074
- US-A1- 2017 365 998

## Description

### Domaine technique

La présente description concerne la protection contre la surcharge de systèmes et installations électriques en courant continu.

Elle se rapporte plus particulièrement à un système de limitation et coupure de courant pour un réseau de distribution de tension continue permettant de limiter le courant dans un circuit aval tout en maintenant une valeur adéquate pour permettre la sélectivité des protections avals. La fonction de coupure est également intégrée au système.

### Techniques antérieures

On connaît des façons de protéger un circuit électrique en limitant le courant de surcharge. Le brevet français n°81 09 707, par exemple, associe un disjoncteur à un limiteur à courant continu à haute tension pour lequel le passage d'un courant de défaut provoque un réchauffement de la résistance dont la valeur ohmique croît très vite. La réduction importante du courant de surcharge facilite sa coupure par un disjoncteur. Cette solution est encombrante car la valeur ohmique relativement élevée des céramiques est directement proportionnelle à l'encombrement de la résistance.

On sait également que la coupure des courants de surcharge des lignes à courant continu est un problème difficile, puisqu'on ne dispose pas, comme pour la coupure des courants alternatifs, du passage par zéro du courant. Le document US9455575B2 propose, sur une ligne haute tension comprenant un convertisseur AC/DC, d'introduire une source de contre tension continue suffisamment élevée pour permettre la réduction et l'annulation du courant continu.

On pourra se référer également aux documents d'art antérieur US20150236498, FR3030105 et US2018062384.

Ces mises en oeuvre sont uniquement adaptées pour du courant alternatif ou pour de la haute tension qui se caractérise par des installations particulièrement encombrantes. L'inductance d'un circuit est l'élément principal limitant le courant de défaut de tension alternative, avec une influence plus importante que la résistance dont la valeur est réduite pour réduire les pertes par effet Joule dans les conducteurs d'alimentation. En courant continu, le courant présumé de défaut est la conséquence de la résistance du circuit de distribution, qui est réduite pour limiter les pertes. Les courants de défauts présumés peuvent donc être particulièrement plus importants qu'en courant alternatif. Dimensionner les éléments du circuit sur des courants de défaut très importants est pénalisant. La fonction de limitation du courant permet de remédier à ce problème. La limitation est maintenue pour une durée prédéterminée, liée au temps d'action des dispositifs de protection avals.

Une autre option est l'ouverture automatique d'un disjoncteur mais cela déconnecte une partie du réseau. Après que le défaut soit contrecarré, la partie raccordée doit repasser par une phase de redémarrage et une série de vérifications avant qu'une reconnexion soit possible. Ceci entraîne une interruption prolongée et donc une indisponibilité du circuit.

Une fonction disjoncteur continue est également nécessaire en plus de la fonction limitation. Cette protection peut agir sur ordre d'ouverture externe, ou encore de façon locale si le courant de défaut limité dépasse un certain temps. Ceci permet d'obtenir une protection en cas de défaut localisé en amont des protections avals, ou assurer la coupure ultime en cas de défaillances de celles-ci.

### Exposé de l'invention

L'invention est définie dans le jeu de revendications annexé.

Le système selon la présente description a pour but de pallier au moins certains des inconvénients précités en associant un moyen de limitation, qui par exemple est un composant passif, à un appareil de coupure, par exemple un commutateur statique, couplé à un absorbeur de surcharge, pour permettre de maintenir transitoirement un courant de défaut maitrisé à une valeur permettant de ne pas endommager les circuits amonts et avals, mais à la fois suffisamment élevé pour autoriser la sélectivité de protections du départ aval en défaut, sans pour autant déclencher l'intégralité du circuit aval. Si le défaut n'a pas été éliminé par un dispositif aval (par exemple si le défaut apparait sur le bus continu commun), le circuit interrompt alors le courant après un temps déterminé, ce temps étant supérieur au temps de coupure des circuits de protection avals.

Il est donc proposé un système de protection contre les surcharges en courant continu et à moyenne tension, permettant à la fois la limitation et la coupure du courant, tout en bénéficiant d'un encombrement particulièrement réduit. L'invention propose une combinaison de ces deux fonctions en utilisant un unique pôle principal, afin de réduire l'encombrement global du dispositif.

Il est également proposé un système de protection électrique pour circuit électrique à courant continu et moyenne tension selon la revendication 1.

Dans un mode de réalisation, une branche de coupure comprend en outre le premier module de commutation auxiliaire couplé en série avec le système écrêteur de tension.

De préférence, le système écrêteur de tension est un élément résistif non linéaire qui comprend un oxyde métallique.

Dans un mode de réalisation, le système de protection électrique comprend en outre une branche de limitation couplée en parallèle du module de commutation principale entre la première borne et la deuxième borne, ladite branche de limitation comprenant un module de limitation résistif.

Avantageusement, la branche de limitation comprend en outre un second module de commutation auxiliaire couplé en série avec le module de limitation du courant.

Avantageusement, le module de limitation comprend un matériau dont la capacité calorifique volumique dépasse 2 J/ cm3 /°C.

De préférence, le module de commutation principal comprend une électrode de conduction et les moyens de commande sont configurés pour commander l'ouverture du module de commutation principal en fonction de la variation d'une grandeur électrique de son électrode de conduction.

Avantageusement le système de protection peut être inclus dans un parallélépipède de volume inférieur à un mètre cube pour une puissance transité d'une dizaine de MVA et une limitation du courant en cas de défaut à deux fois sa valeur nominale durant 0,2 seconde.

Les réalisations qui ne sont plus couvertes par les revendications sont indiquées dans la partie de la légende des figures. La légende a été mise à jour en conséquence.

### Brève description des dessins

L'invention sera mieux comprise à l'étude détaillée de quelques modes de réalisation pris à titre d'exemples non limitatifs et illustrés par les dessins annexés, sur lesquels :
La figure 1 illustre le système de protection selon un premier mode de réalisation , non conforme à l'invention.
La figure 2 illustre le système de protection selon un deuxième mode de réalisation , non conforme à l'invention.
La figure 3 illustre le système de protection selon un troisième mode de réalisation selon l'invention.
La figure 4 illustre le système de protection couplé à un circuit électronique à protéger.
La figure 5 illustre le fonctionnement du système de protection selon le premier mode de réalisation de la figure 1.
La figure 6 illustre le fonctionnement du système de protection selon le deuxième mode de réalisation de la figure 2.
La figure 7 illustre le système de protection selon le troisième mode de réalisation de la figure 3.
La figure 8 illustre l'évolution du courant délivré par la deuxième borne du système de protection lors d'un défaut dont le courant est limité par le dispositif de l'invention dans un mode linéaire puis est éliminé par un dispositif de protection en aval.
La figure 9 illustre l'évolution du courant délivré par la deuxième borne du système de protection lors d'un défaut dont le courant est limité par le dispositif de l'invention dans un mode hachage puis est éliminé par un dispositif de protection en aval.
La figure 10 illustre l'évolution du courant délivré par la deuxième borne du système de protection lors d'un défaut dont le courant est limité par le dispositif de l'invention dans un mode linéaire puis est éliminé par ledit dispositif au bout d'un temps prédéterminé.
La figure 11 illustre l'évolution du courant délivré par la deuxième borne du système de protection lors d'un défaut dont le courant est limité par le dispositif de l'invention dans un mode hachage puis est éliminé par ledit dispositif au bout d'un temps prédéterminé.

### Description détaillée

Sauf précision contraire, les expressions "approximativement", "sensiblement", "environ", "de l'ordre de", etc. signifient qu'une légère variation par rapport à la valeur nominale considérée est possible, notamment d'un pourcentage faible, en particulier à 10% près.

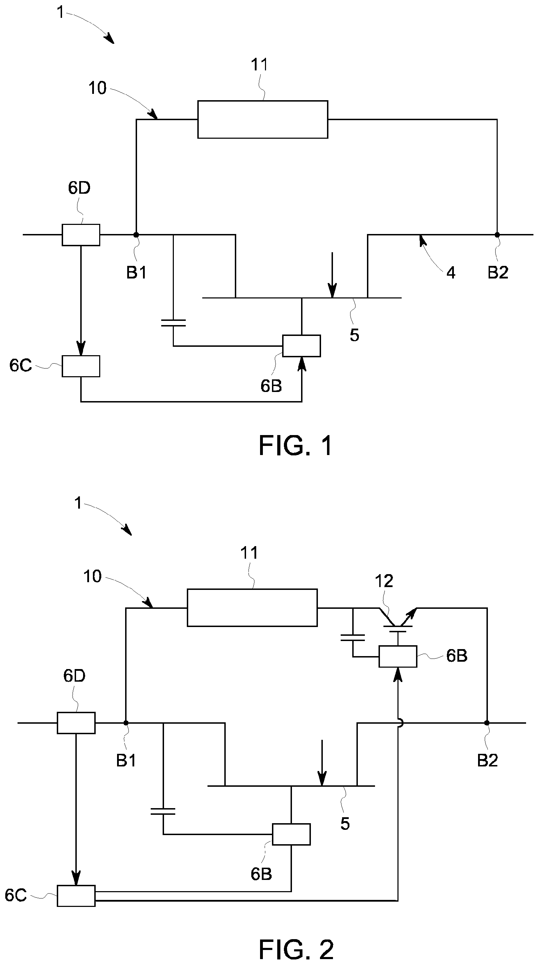

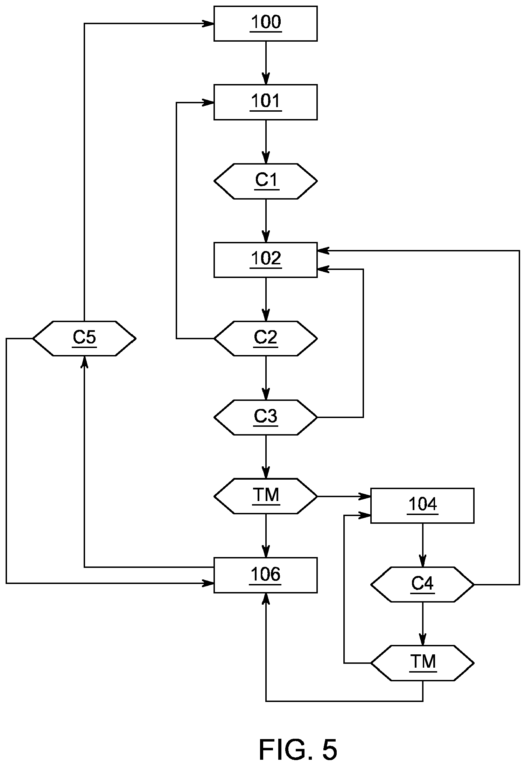

La figure 1 est une représentation schématique d'un premier mode de réalisation du système de protection 1. Son fonctionnement est illustré sur le schéma de la figure 5. Il permet de réaliser une limitation et une coupure de courant par une contre-tension produite par le système écrêteur de tension 11.

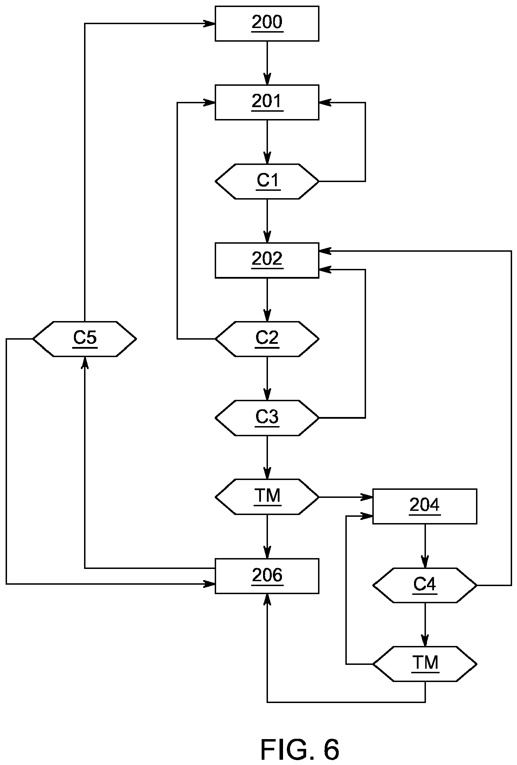

La figure 2 est une représentation schématique d'un deuxième mode de réalisation du système de protection 1. Son fonctionnement est illustré sur le schéma de la figure 6. Il permet de choisir une contre tension lors des modes de limitation et coupure qui soit indépendante de la capacité du système écrêteur de tension 11 à supporter une tension continue permanente.

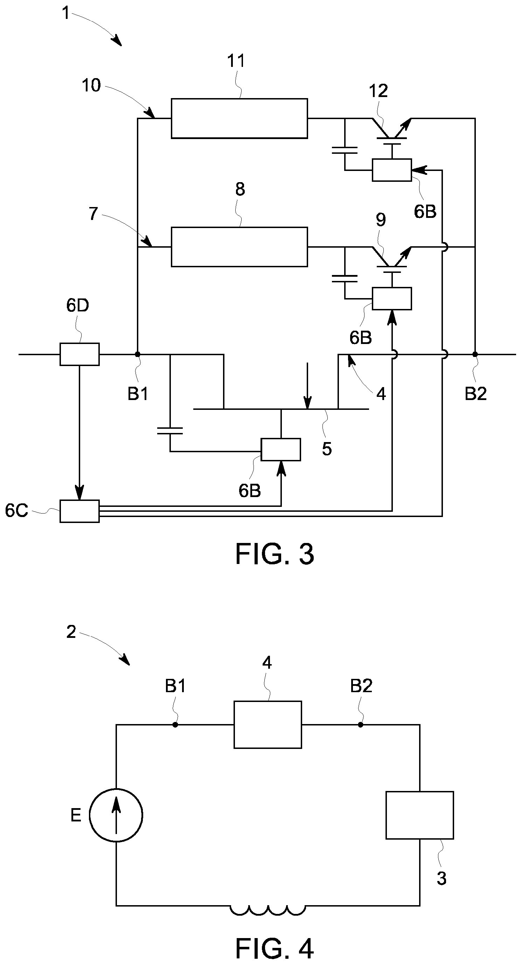

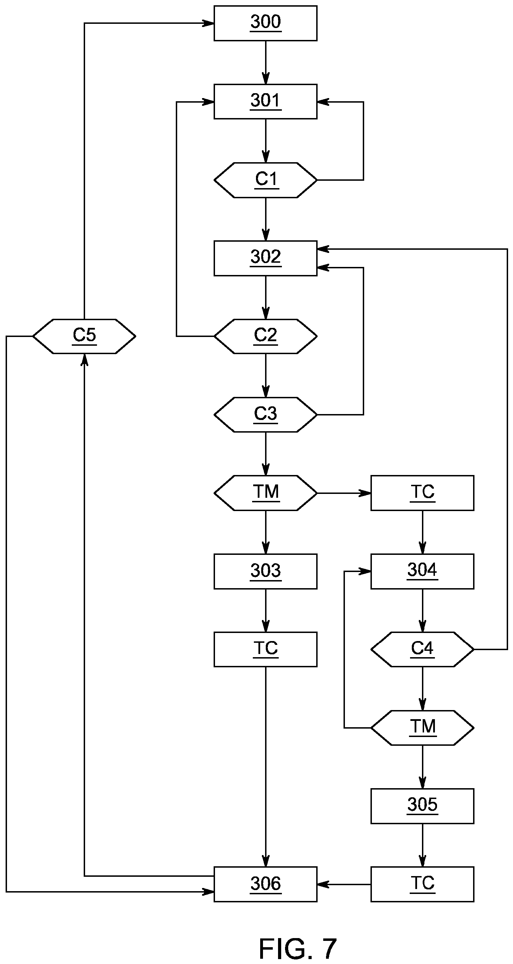

La figure 3 est une représentation schématique d'un troisième mode de réalisation du système de protection 1. Son fonctionnement est illustré sur le schéma de la figure 7. Il permet à la fois la coupure et la limitation en cas de surcharge de courant d'une ligne à courant continu à moyenne tension tout en évitant que l'énergie dissipée lors de la limitation ne soit dissipée dans le système écrêteur de tension 11, permettant ainsi d'accroitre sa durée de vie.

Comme illustré sur la figure 4, le système de protection 1 est destiné à être intégré entre deux bornes d'un circuit électrique 2 en courant continu en moyenne tension, pour limiter le courant de défaut dans la ligne en cas d'apparition d'un défaut dans le circuit aval 2, et de couper ce courant de défaut s'il n'a pas disparu au bout d'un temps prédéterminé TP. Le circuit 2 peut comporter en outre d'autres systèmes de protection contre les courants de défaut placés en aval du système de protection électrique 1. Le système de protection électrique 1 est particulièrement compact, contrairement aux systèmes existants en haute tension. Il s'intègre notamment dans un volume inférieur au mètre cube pour une capacité de 10MW transité avec une limitation à deux fois le courant nominal durant deux-cents millisecondes.

Il peut comporter au moins deux ensembles identiques insérés respectivement en série sur un même circuit, avec chaque ensemble connecté dans une des deux polarités du réseau de distribution continue. Un seul système 1 est représenté à la figure 4.

Le système de protection 1 a une première borne B1 et une deuxième borne B2 entre lesquelles s'étend une branche principale 4. Par exemple, la première borne B1 peut être couplée à une source de courant à moyenne tension, et la deuxième borne B2 est couplée à une charge électrique 3 comprenant un réseau de distribution électrique, dont les branches peuvent comporter leurs propres protections, de calibre en courant inférieur au calibre en courant de l'élément 1. On peut considérer que, dans l'exemple illustré, la première borne B1 est une borne amont ou d'entrée du courant, tandis que la deuxième borne B2 est une borne aval, ou de sortie du courant, dans le sens de circulation du courant. Cependant, la première borne B1 et la deuxième borne B2 sont interchangeables dans la présente description et peuvent constituer indifféremment une anode et une cathode. Le système de protection 1 selon un mode de réalisation peut être réversible, de sorte que l'on pourrait prévoir une circulation du courant au travers du système de protection 1 selon le sens inverse. L'utilisation d'interrupteurs réversibles en courant et tension, ou bien de commutateurs inverseurs du courant connus en soi peut être prévue pour configurer plus facilement le système de protection 1 sur un circuit 2.

Les composants 3 amont et aval du circuit 2 fonctionnent pour un courant électrique compris dans une plage de fonctionnement en deçà d'une valeur nominale. On définit au-dessus de la valeur nominale une valeur seuil basse VB et une valeur seuil haute VH qui correspondent à des seuils entre lesquels le système va limiter le courant. La branche principale 4 est destinée à être traversée par un courant nominal d'intensité In inférieure aux valeurs de seuil basse VB et haute VH qui sont par exemple de valeurs respectives de deux-cents pourcents et deux-cent-vingt pourcents de la valeur nominale du courant. Par « valeur nominale du courant », on entend la valeur du courant continu absorbé par le circuit 3 lors d'un fonctionnement normal du système. Les composants 3 du circuit 2 peuvent notamment comprendre plusieurs systèmes de protections électrique avals au système 1, destinés à l'élimination du courant de défaut. Le système 1 vient alors limiter le courant de défaut dans une plage apte à permettre l'ouverture des protections du circuit 2 si le défaut est en aval de ces protections. Si les protections du circuit 2 n'ont pas fonctionné dans un laps de temps prédéterminé TP ou si le défaut est situé en aval du circuit 1 mais en amont des protections du circuit 2, alors le circuit 1 procède après la phase de limitation du courant, après un temps prédéterminé TP, à l'ouverture du circuit de protection 2.

Le système 1 s'insère notamment, mais non exclusivement, dans une installation utilisant de la haute tension A (ou HTA), ou moyenne tension (MT) qui excède mille-cinq-cents volts sans dépasser vingtmille volts en courant continu. Un tel système de protection 1 pourra par exemple être dimensionné pour un courant nominal de l'ordre de quelques kiloampères et des tensions continues au moins égales à dix kilovolts, voire au moins égales à vingt kilovolts. Un tel système de protection 1 pourra également être dimensionné pour un courant continu de service nominal au moins égal à un kiloampère, voire au moins égal à trois kiloampères.

Dans tous les modes de réalisation, la branche principale 4 comprend un module de commutation principal 5. Le module de commutation principal 5 est un contacteur statique. Par exemple, le commutateur principal 5 est de type transistor à effet de champ à grille isolée (MOSFET). Alternativement, le commutateur principal 5 peut être un commutateur à semi-conducteur ayant une grille isolée (IGBT). Il présente des caractéristiques inductives et résistives intrinsèques. Le commutateur principal 5 présente notamment une légère résistivité à l'état passant et une limite maximale de sa fréquence de commutation possible. On peut coupler en série dans la bande principale 4 plusieurs commutateurs pour réaliser le module de commutation principal 5, de manière à répartir la tension sur les commutateurs connectés en série.

Comme illustré à la figure 1, le commutateur principal 5 dispose de connexions pour être commandé par des moyens de commande 6B et de connexions pour la puissance. Le commutateur principal 5 peut être ouvert ou fermé par les moyens de commande 6B. Le circuit de puissance est constitué par des composants électroniques de puissance, tels qu'un transistor à effet de champs ou un IGBT, car il faut que le composant soit commandé à l'ouverture d'une part, et qu'il puisse l'être avec un contrôle dit « contrôle de dv/dt » d'autre part.

Grâce aux moyens de commande 6B, le système de protection 1 est notamment configuré pour commuter, comme indiqué sur les figures 1 à 3, entre un premier état 101, 201, 301, dans lequel le commutateur principal 5 est passant et un deuxième état 104, 204, 304 dans lequel le commutateur principal 5 forme un coupe-circuit de la branche principale 4. Par exemple, le module de commutation principal 5 comprend une électrode de conduction et les moyens de commande 6B sont configurés pour commander en tension l'ouverture du module de commutation principal 5 en fonction de la variation d'une grandeur électrique de son électrode de conduction. Le commutateur principal 5 peut comprendre en outre un condensateur relié à l'une de ses électrodes, notamment entre son drain ou son émetteur, et sa grille, et être commandé selon la tension aux bornes du condensateur. Le contrôle dit « contrôle de dv/dt» d'un transistor avec rétroaction sur sa grille via un condensateur constitue un circuit de type « snubber » connu de l'homme du métier.

Comme illustré en figure 1, le système de protection 1 comprend en outre une branche de coupure 10, couplée entre la première borne B1 et la deuxième borne B2 en parallèle de la branche principale 4, et comprenant un système écrêteur de tension 11. Par exemple, le système écrêteur de tension 11 comprend un ou plusieurs éléments résistifs non linéaires 11 de type varistance. Par exemple, la varistance 11 est un élément comprenant des particules d'oxyde de zinc qui est fortement non linéaire et qui suit une caractéristique tension/intensité exponentielle, où la tension est par exemple proportionnelle à une puissance de trente de l'intensité. La branche de coupure 10 produit une contre tension supérieure à la tension de la source de sorte qu'elle peut faire baisser le courant jusqu'à une valeur quasiment nulle correspondant à son courant de fuite pour une tension égale à celle de la source.

En se référant à la figure 5 qui illustre le fonctionnement du système 1 selon le premier mode de réalisation de la figure 1, le commutateur principal 5 est maintenu fermé dans le cas usuel.

Le système 1 est à l'arrêt lors de l'étape 100, auquel cas la branche 4 est coupée.

Le système 1 est mis en marche lors de l'étape 101 par la fermeture de la branche principale 4. Ceci est le mode de fonctionnement nominal du système, qui dure tant que le courant reste dans sa plage nominal et qu'aucun ordre d'arrêt externe n'est envoyé à l'interrupteur principal.

L'étape de comparaison C1 consiste à comparer que le courant I délivré par la première borne B1 passe au-dessus de la valeur nominale In.

Si I ne passe pas au-dessus de la valeur In, le premier état 101 du système 1 est maintenu. S'il est vérifié que I dépasse In (I > In), le système 1 passe à l'étape 102.

Lors de l'étape 102, la branche principale 4 reste fermée. Si le courant reste inférieur au seuil VH mais supérieur à In on est alors dans un régime de surcharge. La durée de ce régime peut être limitée par un temps TS, qui est le temps de surcharge au-delà de In, prédéterminé ou indexé sur le niveau de surcharge. Ceci permet de protéger le circuit d'une surcharge prolongée. Une méthode alternative peut consister à utiliser une valeur limite de température du composant 5 plutôt que le délai TS pour procéder à l'ouverture.

Lors de l'étape C2, on compare de nouveau I à In. Si l'on n'a pas I > In, le défaut de surcharge a été éliminé et le système 1 revient dans le premier état 101. Si I > In, la surcharge est diminuée mais non éliminée l'étape C2 se poursuit par l'étape C3.

Lors de l'étape C3, la relation I > VH est évaluée. Si I < VH est vérifié, on reste dans l'état 102. Si I > VH est vérifié, il s'agit d'un défaut faiblement impédant et le processus se poursuit par une étape TM.

L'étape TM vérifie que le temps écoulé depuis un instant TD initié dès que le courant dépasse le seuil VH ne dépasse pas un temps maximal admissible de défaut. Si cette durée maximale n'a pas été atteinte, le système 1 passe à l'étape 104. Si la durée maximale a été atteinte lors de l'étape TM, le système 1 passe à l'étape 106.

Lors de l'étape 104, la branche principale 4 est ouverte et le système 1 passe à l'étape C4.
L'étape C4 est, comme dans le premier mode de réalisation, une comparaison entre I et VB. Si I est en dessous la valeur seuil basse VB, le système revient à l'étape 102, sinon il passe de nouveau dans une étape TM.

L'étape TM vérifie que le temps écoulé depuis TD ne dépasse pas le temps maximal prédéterminé, et défini pour permettre l'action des systèmes de protection avals. Si cette durée maximale d'utilisation n'a pas été atteinte, le système 1 reste à l'étape 104. Si la durée maximale a été atteinte lors de l'étape TM, le système 1 passe à l'étape 106.

Lors de l'étape 106, le système 1 a atteint la durée TM qui est la durée maximale admissible de courant de défaut dans le système 1. L'interrupteur principal 5 est maintenu ouvert. Le courant passe dans la branche 10. La contre-tension générée par le système écrêteur de tension 11 fait descendre le courant jusqu'à une faible valeur correspondant au courant résiduel de fuite du système écrêteur de tension 11 quand la tension d'entrée de la ligne, délivrée par la source indiquée sur la figure 4, est appliquée à ses bornes. Etant donné que dans ce mode de réalisation l'écrêteur 11 est dimensionné pour supporter la tension continue d'entrée, son courant de fuite à cette tension continue sera typiquement inférieur au milliampère. L'étape 106 mène à l'étape C5.

Lors de l'étape C5, le courant est comparé à un seuil de détection de courant résiduel Ires, typiquement de l'ordre du milliampère dans ce mode de réalisation. Dès que le courant passe naturellement en-dessous de ce seuil, on revient à l'étape 100, sinon on retourne à l'étape 106.

Comme illustré sur la figure 2 qui illustre le deuxième mode de réalisation du système 1, le système écrêteur de tension 11 peut être couplée en série avec un premier module de commutation auxiliaire 12. Le premier commutateur auxiliaire 12 est maintenu ouvert dans le cas usuel, c'est-à-dire lors des étapes 200 et 201, pour le deuxième mode de réalisation illustré en figure 2. Il peut aussi être maintenu toujours fermé lors des étapes 202-204-206 et le système 1 peut alors être utilisé comme le premier mode de réalisation tel que décrit ci-dessus si un défaut de surcharge est éliminé par le circuit aval.

En se référant à la figure 6 qui illustre le fonctionnement du système 1 selon le deuxième mode de réalisation, le système 1 peut être à l'arrêt lors de l'étape 200, auquel cas les branches 4 et 10 sont coupées.

Le système 1 est mis en marche à l'étape 201 par la fermeture de la branche principale 4 et le maintien ouvert de la branche de coupure 10.

L'étape de comparaison C1, comme dans le premier mode de réalisation, consiste à comparer que le courant I délivré par la première borne B1 passe au-dessus de la valeur nominale In, c'est-à-dire a une tendance croissante au-delà du courant nominal In.

Si I ne dépasse pas In, le premier état 201 du système 1 est maintenu. S'il est vérifié que I dépasse In (I > In), le système 1 passe à l'étape 202.

Dans l'étape 202, la branche principale 4 reste fermée et la branche de coupure 10 est fermée. Une nouvelle valeur TS marque l'instant à partir duquel on détecte I>In.

Lors de l'étape C2, on compare de nouveau I à In. Si l'on n'a pas I > In, le défaut de surcharge a disparu (I < In) et le système 1 revient dans le premier état 201. Si I > In, l'étape C2 se poursuit par l'étape C3.

Lors de l'étape C3, la relation I > VH est évaluée. Si l'inégalité I > VH n'est pas vérifiée, le système 1 revient à l'étape 202 qui peut le mener, par la comparaison C2, au premier état 201 si la surcharge a disparu (I < In). Si I > VH est vérifié, il y a un défaut faiblement impédant et le processus se poursuit par une étape TM.

L'étape TM vérifie que le temps écoulé depuis TD, qui correspond à l'instant initial de la détection I>VH, ne dépasse pas le temps maximal prédéterminé, et définit pour permettre l'action des systèmes de protection avals. Si cette durée maximale d'utilisation n'a pas été atteinte, le système 1 passe à l'étape 204. Si la durée maximale a été atteinte lors de l'étape TM, le système 1 passe à l'étape 206.

Lors de l'étape 204, la branche de coupure 10 est fermée et la branche principale 4 ouverte et le système 1 passe à l'étape C4. L'étape C4 est, comme dans le premier mode de réalisation, une comparaison entre I et VB. Si I est en dessous la valeur seuil basse VB, le système revient à l'étape 202, sinon il passe de nouveau dans une étape TM.

L'étape TM vérifie que le temps écoulé depuis TD ne dépasse pas le temps maximal prédéterminé et défini TP pour permettre l'action des systèmes de protection avals. Si cette durée maximale d'utilisation n'a pas été atteinte, le système 1 reste à l'étape 204. Si la durée maximale a été atteinte lors de l'étape TM, le système 1 passe à l'étape 206.

L'étape 206 correspond au même état du système que lors de l'étape 204. Ainsi, l'interrupteur principal 5 est maintenu ouvert. Le courant passe dans la branche 10. La contre tension générée par le système écrêteur de tension 11 fait descendre le courant jusqu'à une faible valeur correspondant au courant résiduel de fuite du système écrêteur de tension 11, quand la tension d'entrée de la ligne est appliquée à ses bornes. L'étape 206 mène à une étape C5.

Lors de l'étape C5, le courant est comparé à un seuil de détection de courant résiduel Ires. Tant que le courant reste au-dessus de Ires, l'état 206 est maintenu. Si le courant passe sous le seuil Ires et que l'interrupteur 12 est ouvert, on retourne à l'état 200.

Dans les modes de réalisation illustrés en figures 1 et 2, la branche 10 assure à la fois la fonction coupure du courant continu, et, associée à l'action de hachage de l'interrupteur principal 5, cette branche assure également la fonction de limitation du courant continu dans le cas d'un défaut aval de faible impédance, c'est-à-dire un défaut dont le courant non limité dépasserait VH.

Le système écrêteur de tension 11 peut être réalisé avec des varistances, c'est-à-dire une résistance électrique fortement nonlinéaire, composée d'oxyde métallique, ayant une fonction d'écrêteur de tension. De tels composants peuvent supporter des courants impulsionnels élevés, typiquement au-delà de cent kiloampères. Il est possible de dimensionner les varistances afin de supporter l'énergie dissipée lors des phases de limitation. Cependant la durée de vie des varistances est diminuée à chaque utilisation, et cela peut entraîner un surdimensionnement important de celles-ci, et donc impacter fortement le volume de la solution.

Si le système est dimensionné pour un nombre important de limitations de courant et que l'élément écrêteur de tension 11 est réalisé au moyen de varistances, il est préférable alors de réaliser la fonction limitation par un système ayant une grande capacité d'absorption d'énergie au regard de son volume, et de réduire le rôle des varistances à la fonction de coupure uniquement.

Comme illustré en figure 3 qui illustre un troisième mode de réalisation du système 1, celui-ci peut comprendre en outre une branche 7 dédiée uniquement à la fonction de limitation, tandis que dans ce mode de réalisation la branche 10 est dédiée exclusivement à la coupure.

Ainsi, dans le troisième mode de réalisation illustré en figure 3, la branche de limitation 7 est couplée en parallèle de la branche principale 4 entre la première borne B1 et la deuxième borne B2 et comprend un module de limitation de courant 8. Le module de limitation 8 peut être un ensemble d'éléments résistifs assemblés en série ou en parallèle, et dont la valeur permet sensiblement d'atteindre la valeur de limitation souhaitée pour un défaut aval très faiblement impédant. Le module de limitation 8 a une forte compacité, par exemple avec une capacité de dissiper un mégajoule dans un volume inférieur à vingt litres. Au module de limitation 8 doit être connecté en série un interrupteur commandable à l'ouverture 9, afin de ne pas empêcher l'interruption du courant par la branche 10 si celle-ci est voulue. L'interrupteur 9 peut typiquement être réalisé à partir de composants IGBTs ou MOS.

Pour atteindre la compacité souhaitée du système de protection 1, le module de limitation 8 comprend un matériau dont la capacité calorifique volumique dépasse deux joules par centimètre cube par degré Celsius. Par exemple, le module de limitation 8 peut comprendre plusieurs disques métalliques d'un volume de l'ordre de quatre cents centimètres cubes, associés pour obtenir une capacité calorifique totale de l'ordre de trente-cinq kilojoules par degré Celsius de manière à dissiper une énergie de l'ordre de quatre mégajoules en cent millisecondes. Le module de limitation 8 est par exemple une résistance à base de carbone-céramique.

En se référant à la figure 7 qui illustre le fonctionnement du troisième mode de réalisation de la figure 3, le module de commutation principale 5 est maintenu fermé dans le cas usuel et le système 1 tel que réalisé dans le troisième mode de réalisation peut être utilisé comme les premier et deuxième modes de réalisation tels que décrits ci-dessus si un courant de surcharge survient.

Le système 1 peut être à l'arrêt lors de l'étape 300, auquel cas les branches 4, 7 et 10 sont coupées.

Le système 1 est mis en marche à l'étape 301 par la fermeture de la branche principale 4 et le maintien ouvert de la branche de coupure 10 et de la branche de limitation 7.

L'étape de comparaison C1 est identique aux autres modes de réalisation.

Si I ne dépasse pas In, le premier état 301 (état usuel) du système 1 est maintenu. S'il est vérifié que I dépasse In (I > In), le système 1 passe à l'étape 302.

Dans l'étape 302, la branche principale 4 reste fermée, la branche de limitation 7 est fermée. Une nouvelle valeur TS marque l'instant à partir duquel la surcharge et détectée. TS correspond sensiblement au moment de la détection de l'apparition d'un courant de surcharge.

Lors de l'étape C2, on compare de nouveau I à In. Si l'on n'a pas I > In, le défaut de surcharge a disparu et le système 1 revient dans le premier état 301. Si I > In, l'étape C2 se poursuit par l'étape C3.

Lors de l'étape C3, la relation I > VH est évaluée. Si I > VH n'est pas vérifié le système 1 revient à l'étape 302 qui peut le mener, par l'étape de comparaison C2, au premier état 301 si le défaut a été éliminé. Si I > VH est vérifié, le défaut est faiblement impédant et le processus se poursuit par une étape TM.

L'étape TM vérifie que le temps écoulé depuis TD, qui correspond au premier dépassement de VH, ne dépasse pas le temps maximal prédéterminé, et définit pour permettre l'action des systèmes de protection avals. Si cette durée maximale n'a pas été atteinte, le système 1 passe à une étape TC. Si la durée maximale a été atteinte par l'étape TM, le système 1 passe à l'étape 303.

Une étape TC est un temps mort de commutation, par exemple de dix microsecondes, qui permet de s'assurer, pour la transition du courant d'une branche à une autre, que la branche qui assurera le passage du courant à l'étape suivante ait eu le temps de se fermer complètement. L'étape 303 mène à une étape 306 via une étape TC.

Lors de l'étape 303, la branche principale 4, la branche de limitation 7 et la branche de coupure 10 sont fermées et le système 1 passe à l'étape TC.

Lors de l'étape 304, la branche principale 4 est ouverte, la branche de limitation 7 est fermée et la branche de coupure 10 est ouverte et le système 1 passe à l'étape C4.

L'étape C4 est, comme dans les autres modes de réalisation, une comparaison entre I et VB. Si I est en dessous la valeur seuil basse VB, le système revient à l'étape 302, sinon il passe de nouveau dans une étape TM.

L'étape TM, comme dans tous les modes de réalisation, consiste à vérifier que le temps écoulé depuis TD ne dépasse pas le temps prédéterminé, et défini pour permettre l'action des systèmes de protection avals. Si cette durée maximale d'utilisation n'a pas été atteinte, le système 1 revient à l'étape 304. Si la durée maximale a été atteinte lors de l'étape TM, le système 1 passe à l'étape 305.

Lors de l'étape 305, la branche principale 4 est ouverte, les branches de limitation 7 et de coupure 10 sont fermées et le système 1 passe à l'étape 306 via une étape TC.

Lors de l'étape 306, le système 1 a atteint la durée maximale admissible du module de coupure 11 mais le défaut n'a pas été éliminé par un dispositif aval. Le système 1 fonctionne donc en mode coupure comme dans les modes de réalisation précédents, aux étapes comparables 106 et 206.

Ainsi, lors de l'étape 306, la branche de coupure 10 est fermée et les branches principale 4 et de limitation 7 sont ouvertes, ce qui permet une fonction de coupure par le système 1 pour protéger le reste du circuit 2.

L'étape 306 correspond au même état du système que lors de l'étape 304. Ainsi, l'interrupteur principal 5 est maintenu ouvert. Le courant passe dans la branche 10. La contre tension générée par le système écrêteur de tension 11 fait descendre le courant jusqu'à une faible valeur correspondant au courant résiduel de fuite du système écrêteur de tension 11, quand la tension d'entrée de la ligne est appliquée à ses bornes. L'étape 306 mène à une étape C5.

Lors de l'étape C5, le courant est comparé à un seuil de détection de courant résiduel Ires. Tant que le courant reste au-dessus de Ires, l'état 306 est maintenu. Si le courant passe sous le seuil Ires et que l'interrupteur 12 est ouvert, on retourne à l'état 300.

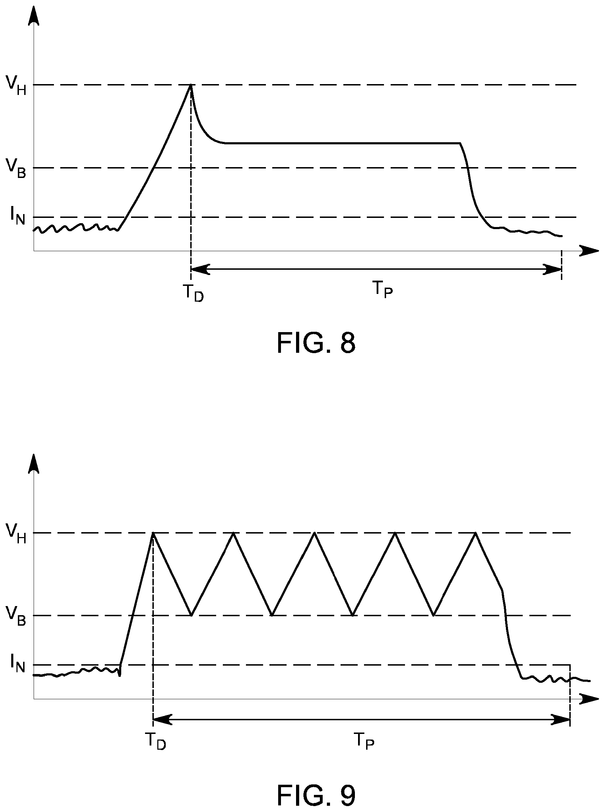

Par les étapes successives 302, C2, C3, TM, TC, 304 et C4, le système peut réaliser une boucle de hachage dans lequel la branche principale 4 est alternativement ouverte et fermée et le courant est successivement abaissé et remonté entre les valeurs VB et VH, comme illustré en figure 9.

Dans le premier mode de fonctionnement 301, le système 1 maintient le module de commutation principal 5 fermé pour garantir la conduction dans la branche principale 4 à travers le module de commutation principal 5 passant. En cas de défaut faiblement impédant survenant dans le premier mode de fonctionnement 301, le circuit 2 génère une commande de fermeture d'un deuxième module de commutation auxiliaire 9 (étape 302) suivie d'une commande d'ouverture du module de coupure principal 5, de manière à parvenir au deuxième mode de fonctionnement (étape 304). Ainsi, le premier commutateur auxiliaire 12 est toujours ouvert entre le premier état 301 et le deuxième état, dit état de limitation 304.

De préférence, les moyens de commande 6B et de contrôle 6C détectent au préalable l'apparition d'une surintensité, survenant à un instant TD lors du franchissement de l'intensité de seuil haut VH, ou un instant TS lors du franchissement de l'intensité nominale In. Les moyens de commande 6B génèrent ensuite la commande d'ouverture lors de l'étape 304 seulement après le délai d'attente TC, par exemple de dix microsecondes, afin de laisser le temps de la fermeture de la branche de limitation 7 pour assurer la continuité du passage du courant. L'intensité de seuil VH qui correspond à l'activation de la branche de limitation 7 pourra par exemple être au moins égale à deux fois l'intensité du courant nominal In, afin de limiter les risques d'ouverture intempestive de la branche principale 4. Ainsi, les moyens de contrôle 6C et de commande 6B sont configurés pour appliquer des signaux de commande au module de commutation principal 5 et aussi, le cas échéant, aux modules de commutation auxiliaires 9, 12, en vue d'obtenir sélectivement leurs ouvertures ou fermetures respectives. L'utilisation, si elle a lieu, de la branche de coupure 10, se fait par les étapes successives 303, TC, 306 ou 305, TC puis 306 si la durée maximale de limitation a été atteinte.

Dans le deuxième état 304 du système de protection 1, le module de commutation principal 5 est ouvert et le module de limitation 8 abaisse l'intensité à une valeur appelée intensité limitée. L'intensité limitée par le module de limitation 8 est définie par ses caractéristiques intrinsèques ainsi que l'impédance du circuit extérieur, notamment l'impédance équivalente des éléments avals 3 lors du défaut. Les valeurs d'intensité de seuil bas VB et d'intensité limitée peuvent être égales. La valeur d'intensité limitée est inférieure à l'intensité de seuil haut VH qui déclenche l'ouverture du commutateur principal 5 suivie de l'entrée en action du limiteur 8 grâce aux moyens de commande 6B. Par exemple, l'intensité de seuil haut VH est égale à deux-cent-vingt pourcents de la valeur de courant nominal In.

Les moyens de commande 6B de l'état du module de commutation principal 5 sont configurés pour commuter le commutateur principal 5 entre les premier et deuxième états de fonctionnement (101, 201, 301, 104, 204, 304). Le premier état (101, 201, 301) est le mode nominal usuel, dans lequel le commutateur principal 5 est dans un état fermé et un courant nominal peut circuler au travers du système de protection 1 dans la branche principale 4. Par exemple, dans le premier état (101, 201, 301), le commutateur principal 5 est électriquement passant avec une faible résistance intrinsèque. Dans le premier état (101, 201, 301), le courant délivré par la première borne B1 est sensiblement intégralement orienté vers la branche principale 4 qui est passante.

Dans le deuxième état (104, 204, 304), ou mode de limitation, le module de commutation principal 5 est dans un état ouvert et constitue un coupe-circuit de la branche principale 4 et la branche de limitation 7 est passante. Le courant délivré par la première borne B1 circule alors vers la branche de limitation 7 jusqu'à la deuxième borne B2.

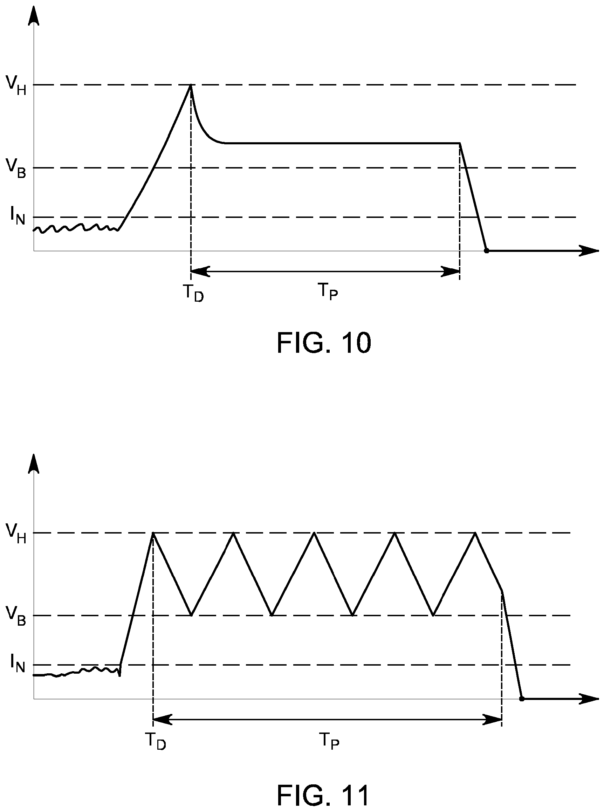

Comme illustré en figures 8 et 10, si dans le deuxième état (104, 204, 304) le courant reste supérieur au seuil bas VB, on reste dans cet état où la limitation de courant est de type linéaire, sans hachage. Si, comme illustré en figure 8, le défaut est éliminé par un dispositif de protection aval du circuit 3, on revient au premier état (101, 201, 301) en passant transitoirement par le deuxième état. Si, comme illustré en figure 10, le défaut n'a pas été éliminé par le dispositif aval, et que le courant reste supérieur au seuil bas VB, alors dès que le temps écoulé depuis TD, initié lorsque le courant en entrée de la borne B1 dépasse pour la première fois VH, dépasse le temps prédéfini TP, le dispositif 1 interrompe alors le courant par l'étape 306 via l'étape 305.

Tant que le défaut n'a pas été éliminé lors de l'étape de limitation 104 204, 304, la comparaison C4 du courant de première borne B1 par rapport à la valeur de seuil basse VB, le procédé se poursuit vers l'étape 102 202, 302 de limitation ou 106 206, 306 de coupure, notamment selon le temps de fonctionnement du système 1 par rapport au temps maximal TM.

En outre, les moyens de commande 6B et de contrôle 6C sont capables de détecter que le courant délivré par la seconde borne B2 atteint la valeur de seuil basse VB par valeur supérieure et de fermer le commutateur principal 5 le cas échéant à l'étape 104, 204, 304.

Les moyens de commande 6B peuvent ainsi faire fonctionner le circuit électrique 2 malgré une surcharge en première borne B1 en contrôlant le système de protection 1 dans un mode dit de hachage, correspondant aux boucles d'étapes et comparaisons 102 C2 C3 Tm 104 C4 pour le premier mode de réalisation, 202, C2, C3, TM, 204, C4 pour le deuxième mode de réalisation et 302, C2, C3, TM, TC, 304, C4 pour le troisième mode de réalisation.

Dans le troisième mode de réalisation, en mode hachage, la branche de limitation 7 est maintenue continuellement fermée, auquel cas seul le module de commutation principal 5 commute de façon répétée, entre les étapes 302 et 304.

Le comportement du courant délivré par la seconde borne B2 dans le mode de hachage est illustré en figures 9 et 11. Ainsi, dans ce mode, la branche principale 4 est alternativement ouverte et fermée de manière à maintenir le courant délivré par la deuxième borne B2 en-dessous de la valeur de seuil VH et au-dessus de la valeur de seuil VB prédéfinies de fonctionnement du circuit 2.

Si, comme illustré en figure 9, le défaut est éliminé par un dispositif de protection placé en aval du circuit 3, on revient au premier état (101, 201, 301) en passant transitoirement par le deuxième état. Si, comme illustré en figure 11, le défaut n'a pas été éliminé par le dispositif aval, et que le courant reste supérieur au seuil bas VB, alors dès que le temps écoulé depuis TD, initié lorsque le courant en entrée de la borne B1 est supérieur pour la première fois à VH, dépasse le temps prédéfini TP, le dispositif 1 interrompe alors le courant par l'étape 306 via l'étape 303 ou 305.

Les moyens de contrôle 6C peuvent comporter notamment un microprocesseur, de la mémoire vive, de la mémoire morte, un bus de communication et des entrées/sorties de communication. Les moyens de contrôle 6C peuvent comporter ou être reliés à des capteurs 6D, notamment des capteurs de courant (ou de tension) à effet Hall mesurant le courant en divers points du système de protection 1 ou du circuit électrique 2 dans lequel le système de protection 1 est intégré. Dans une version simple, les moyens de contrôle 6C peuvent comporter par exemple un appareil de mesure 6D destiné à mesurer les intensités délivrées par les première ou deuxième bornes, un comparateur doté d'une horloge interne et un bus de communication. Les moyens de contrôle 6C peuvent être dédiés au dispositif ou faire partie d'un circuit de commande contrôlant d'autres éléments du circuit 2. Par exemple, lors de l'étape TM, les moyens de contrôle 6C comparent la durée écoulée depuis l'instant TD à partir duquel a débuté une limitation à une durée maximale prévue pour le fonctionnement des protections avals, par exemple de cent millisecondes.

Les moyens de contrôle 6C sont configurés pour détecter une surintensité du courant délivré par la première borne B1 au cours de l'étape C1 dans laquelle son intensité est comparée à la valeur In. Le circuit 2 peut à cet effet recevoir une mesure du courant traversant la borne B1, au moyen d'un moyen de mesure 6D. En l'absence de surintensité, le système 1 reste dans le premier état 301. Si un franchissement de la valeur VH de courant est détecté lors de l'étape C3, le circuit 2 bascule, depuis le premier mode de fonctionnement 301 vers le deuxième mode de fonctionnement 304 dans lequel le système 1 doit limiter voire couper le courant (étape 306) délivré en deuxième borne B2.

Dans le troisième mode de réalisation, la branche de limitation 7 comprend un second module de commutation auxiliaire 9 comprenant un transistor statique commandé qui peut être maintenu ouvert (cas usuel) ou exceptionnellement fermé par les moyens de commande 6. Le second commutateur auxiliaire 9 est un semiconducteur commandable à l'ouverture, par exemple un transistor bipolaire à grille isolée (IGBT) ou un MOSFET. La fermeture du second module de commutation auxiliaire 9 est effectuée à l'étape 302, juste avant l'ouverture lors de l'étape 304 de la branche principale 4. Ainsi, une détection de surcharge (étape C1) mène à la fermeture lors de l'étape 302 de la branche de limitation 7 grâce au second commutateur auxiliaire 9. Par exemple, le second commutateur auxiliaire 9 est configuré pour se fermer à l'étape 302. Cet interrupteur auxiliaire 9 est nécessaire pour assurer l'état ouvert du dispositif 1 à l'étape 300, et pour permettre la coupure du courant à l'étape 306.

L'étape 104 204, 304 comporte l'ouverture du module de commutation principal 5, donc de la branche principale 4. Dans le second mode de réalisation cette ouverture est permise par la fermeture préalable de la branche de coupure 10 rendue ou maintenue passante lors de l'étape 202. Dans le troisième mode de réalisation cette ouverture est permise par la fermeture préalable de la branche de limitation 7 rendue ou maintenue passante lors de l'étape 302. Elle déclenche le début de la limitation lors de l'étape 104 204, 304 à un instant sensiblement proche de la détection TD, qui correspond au dépassement par le courant en borne 1 du seuil VH, qui peut, par exemple, être enregistré par une horloge des moyens de contrôle 6C de manière à inclure lors de l'étape de comparaison TM la limitation de temps prédéfinie TP, correspondant à une durée permettant le cas échéant au protections avals de supprimer le défaut dans leur branche, et permettre d'assurer ainsi la sélectivité des protections.

Par exemple, un basculement en coupure (étape 206, 306), qui met fin à l'étape de limitation 204, 304, peut survenir lorsque la mesure d'intensité de la borne B1 dépasse le seuil de valeur basse VB durant une certaine durée (par exemple plus de deux fois le courant nominal durant plus de cent millisecondes).

En effet, il est considéré que les protections avals, c'est à dire les protections incluses dans le réseau de distribution aval 3, doivent pouvoir opérer dans un temps inférieur à la durée TM, typiquement d'une centaine de millisecondes, pour un niveau de courant suffisant pour assurer la sélectivité de ces protections avals. Si le courant dans la borne B1 reste supérieur au seuil minimal VB, cela signifie que les protections avals n'ont pas fonctionné ou alors que le défaut se situe entre l'élément de protection 1 et le réseau aval 3. Dans un cas comme dans l'autre le dispositif 1 doit s'ouvrir pour couper le courant de défaut, en passant de l'étape 104, 204, 304 à l'étape 106, 206, 306.

Ainsi, le système de protection 1 permet de protéger les composants en aval du circuit 2 en alliant des technologies de coupure et de limitation d'un courant de défaut tout en utilisant un module résistif 8 très compact.

A la réception d'un ordre de fermeture par les moyens de commande 6, le module de commutation principal 5 est par exemple prévu pour se fermer avec un temps de retard défini, par exemple de dix microsecondes, afin de laisser le temps aux premier et/ou deuxième commutateurs auxiliaires 9, 12 de se fermer et de permettre l'établissement des courants dans les branches de limitation 7 et de coupure 10.

## Revendications

1. Système de protection électrique (1) pour circuit électrique (2) à courant continu et moyenne tension, comprenant un système écrêteur de tension (11) raccordé sur une branche principale (4) s'étendant entre une première borne (B1) et une deuxième borne (B2), configuré pour générer une contre-tension pour un courant la traversant égal à plus de quelques pourcents d'un courant nominal du circuit électrique (2) de manière à diminuer l'intensité du courant de sortie du système de protection (1) et un module de commutation principal (5) couplé en parallèle sur le système écrêteur de tension (11), le module de commutation principal (5) étant configuré pour commuter entre un premier état (101, 201, 301) dans lequel le module de commutation principal (5) est passant et un deuxième état (104, 204, 304) dans lequel le module de commutation principal (5) forme un coupe-circuit, le module de commutation principal (5) comprenant des moyens de contrôle (6C) et de commande (6) du module de commutation principal (5) configurés pour positionner le module de commutation principal (5) dans le deuxième état (104, 204, 304) dès que le courant circulant dans la première borne (B1) atteint par valeur inférieure une valeur limite haute (VH) et pour basculer le module de commutation principal (5) dans le premier état (101, 201, 301) dès que l'intensité du courant traversant la deuxième borne (B2) atteint par valeur supérieure une valeur limite basse (VB) et que le module de commutation principal (5) est dans le deuxième état (104, 204, 304),
le système (1) étant **caractérisé en ce qu'**il comprend en outre une branche de limitation (7) couplée en parallèle du module de commutation principale (5) entre la première borne (B1) et la deuxième borne (B2), ladite branche de limitation (7) comprenant un module de limitation (8) résistif et un second module de commutation auxiliaire (9) couplé en série avec le module de limitation (8) du courant et configuré pour être fermé jusqu'à le module de commutation principal (5) est en position dans son deuxième état, et
un premier module de commutation auxiliaire (12) couplé en série avec le système écrêteur de tension (11) configuré pour être fermé pour entrer dans la position de couplage du second module de commutation auxiliaire (9) en fonction du dépassement d'un seuil par le courant et d'un temps écoulé depuis un instant initié dès que le courant dépasse ledit seuil comparé à un temps maximal admissible de défaut.

2. Système de protection (1) selon la revendication 1, dans lequel une branche de coupure (10), couplée entre la première borne (B1) et la deuxième borne (B2) en parallèle de la branche principale (4), comprend le premier module de commutation auxiliaire (12) et le système écrêteur de tension (11).

3. Système de protection (1) selon l'une quelconque des revendications précédentes, dans lequel le système écrêteur de tension (11) est un élément résistif non linéaire qui comprend un oxyde métallique.

4. Système de protection (1) selon la revendication 4, dans lequel le module de limitation (8) comprend un matériau dont la capacité calorifique volumique dépasse 2 J/cm³ /°C.

5. Système de protection (1) selon l'une des revendications précédentes, dans lequel le module de commutation principal (5) comprend une électrode de conduction et les moyens de commande (6) sont configurés pour commander l'ouverture du module de commutation principal (5) en fonction de la variation d'une grandeur électrique de son électrode de conduction, afin de limiter l'accroissement de la tension en fonction du temps à une valeur prédéfinie.

6. Système de protection (1) selon l'une des revendications précédentes, **caractérisé en ce qu'**il peut être inclus dans un parallélépipède de volume inférieur à un mètre cube.

## Patentansprüche

1. Elektrisches Schutzsystem (1) für einen Stromkreis (2) mit Gleichstrom und Mittelspannung, ein Spannungsbegrenzersystem (11) umfassend, das an einen Hauptzweig (4) angeschlossen ist, und zwischen einer ersten Klemme (B1) und einer zweiten Klemme (B2) verläuft, konfiguriert, um eine Gegenspannung für einen Strom zu erzeugen, der ihn durchfließt, der mehr als einige Prozent eines Nennstroms des Stromkreises (2) beträgt, um die Intensität des Ausgangsstroms des Schutzsystems (1) zu verringern, und ein Hauptschaltmodul (5), das parallel an das Spannungsbegrenzersystem (11) gekoppelt ist, wobei das Hauptschaltmodul (5) konfiguriert ist, um umzuschalten zwischen einem ersten Zustand (101, 201, 301), in dem das Hauptschaltmodul (5) durchlassend ist, und einem zweiten Zustand (104, 204, 304), in dem das Hauptschaltmodul (5) eine Stromkreisunterbrechung bildet, wobei das Hauptschaltmodul (5) Mittel zur Steuerung (6C) und Kontrolle (6) des Hauptschaltmoduls (5) umfasst, die konfiguriert sind, um das Hauptschaltmodul (5) in den zweiten Zustand (104, 204, 304) zu positionieren, sobald der Strom, der durch die erste Klemme (B1) fließt, durch einen tieferen Wert einen oberen Grenzwert (VH) erreicht, und um das Hauptschaltmodul (5) in den ersten Zustand (101, 201, 301) umzulegen, sobald die Intensität des Stroms, der die zweite Klemme (B2) durchfließt, durch einen höheren Wert einen unteren Grenzwert (VB) erreicht und sich das Hauptschaltmodul (5) im zweiten Zustand (104, 204, 304) befindet,
wobei das System (1) **dadurch gekennzeichnet ist, dass** es ferner einen Begrenzungszweig (7) umfasst, der parallel zum Hauptschaltmodul (5) gekoppelt ist zwischen der ersten Klemme (B1) und der zweiten Klemme (B2), wobei der Begrenzungszweig (7) ein resistives Begrenzungsmodul (8) umfasst und ein zweites Hilfsschaltmodul (9), das in Reihe mit dem Strombegrenzungsmodul (8) gekoppelt ist, und konfiguriert ist, um geschlossen zu werden, bis das Hauptschaltmodul (5) in Position in seinem zweiten Zustand ist, und ein erstes Hilfsschaltmodul (12) umfasst, das in Reihe mit dem Spannungsbegrenzersystem (11) gekoppelt ist, das konfiguriert ist, um geschlossen zu werden, um in die Kopplungsposition des zweiten Hilfsschaltmoduls (9) einzutreten, in Abhängigkeit der Überschreitung eines Schwellenwerts durch den Strom und einer Zeit, die seit einem eingeleiteten Moment verstrichenen ist, der initiiert wird, sobald der Strom den Schwellenwert überschreitet, verglichen mit einer maximalen Zeit, die standardmäßig zulässig ist.

2. Schutzsystem (1) nach Anspruch 1, wobei ein Abschaltzweig (10), der zwischen der ersten Klemme (B1) und der zweiten Klemme (B2) parallel zum Hauptzweig (4) gekoppelt ist, das erste Hilfsschaltmodul (12) und das Spannungsbegrenzersystem (11) umfasst.

3. Schutzsystem (1) nach einem der vorhergehenden Ansprüche, wobei das Spannungsbegrenzersystem (11) ein nicht-lineares resistives Element ist, das ein Metalloxid umfasst.

4. Schutzsystem (1) nach Anspruch 4, wobei das Begrenzungsmodul (8) ein Material umfasst, dessen volumenbezogene Wärmekapazität 2 J/cm³/°C überschreitet.

5. Schutzsystem (1) nach einem der vorhergehenden Ansprüche, wobei das Hauptschaltmodul (5) eine konduktive Elektrode umfasst, und die Steuermittel (6) konfiguriert sind, um das Öffnen des Hauptschaltmoduls (5) in Abhängigkeit von der Veränderung einer elektrischen Größe seiner konduktiven Elektrode zu steuern, um den Anstieg der Spannung in Abhängigkeit der Zeit eines vordefinierten Werts zu begrenzen.

6. Schutzsystem (1) nach einem der vorhergehenden Ansprüche, **dadurch gekennzeichnet, dass** es in einem Parallelepiped mit einem Volumen von weniger als einem Kubikmeter eingeschlossen werden kann.

## Claims

1. An electrical protection system (1) for direct current and medium voltage electrical circuit (2), comprising a voltage limiter system (11) connected to a main branch (4) extending between a first terminal (B1) and a second terminal (B2), configured to generate a counter-voltage for a current flowing therethrough equal to more than a few per cent of a nominal current of the electrical circuit (2) so as to reduce the intensity of the output current of the protection system (1) and a main switching module (5) coupled in parallel to the voltage limiter system (11), the main switching module (5) being configured to switch between a first state (101, 201, 301) wherein the main switching module (5) is on and a second state (104, 204, 304) wherein the main switching module (5) forms a circuit breaker, the main switching module (5) comprising means for monitoring (6C) and controlling (6) the main switching module (5) configured to position the main switching module (5) in the second state (104, 204, 304) as soon as the current flowing in the first terminal (B1) reaches a high limit value (VH) by lower value and to switch the main switching module (5) into the first state (101, 201, 301) as soon as the intensity of the current passing through the second terminal (B2) reaches a lower limit value (VB) by upper value and that the main switching module (5) is in the second state (104, 204, 304),
the system (1) being **characterised in that** it further comprises a limitation branch (7) coupled in parallel to the main switching module (5) between the first terminal (B1) and the second terminal (B2), said limitation branch (7) comprising a resistive limitation module (8) and a second auxiliary switching module (9) coupled in series with the current limiting module (8) and configured to be closed until the main switching module (5) is in position in its second state, and comprises a first auxiliary switching module (12) coupled in series with the voltage limiter system (11) configured to be closed to enter the coupling position of the second auxiliary switching module (9) according to the exceeding of a threshold by the current and a time elapsed since an instant initiated as soon as the current exceeds said threshold compared with a maximum admissible default time.

2. The protection system (1) according to claim 1, wherein a cut-off branch (10), coupled between the first terminal (B1) and the second terminal (B2) in parallel with the main branch (4), comprises the first auxiliary switching module (12) and the voltage limiter system (11).

3. The protection system (1) according to any one of the preceding claims, wherein the voltage limiter system (11) is a non-linear resistive element which comprises a metal oxide.

4. The protection system (1) according to claim 4, wherein the limitation module (8) comprises a material whose volumetric heat capacity exceeds 2 J/cm³/°C.

5. The protection system (1) according to one of the preceding claims, wherein the main switching module (5) comprises a conduction electrode and the control means (6) are configured to control the opening of the main switching module (5) according to the variation of an electrical quantity of its conduction electrode, in order to limit the increase in voltage according to the time to a predefined value.

6. The protection system (1) according to one of the preceding claims, **characterised in that** it can be included in a parallelepiped of volume less than one cubic metre.
